# EUROPEAN PATENT APPLICATION

(11) **EP 4 703 496 A1**
(43) Date of publication of application: **04.03.2026**
(21) Application number: 24196551.6
(22) Date of filing: 26.08.2024
(51) Int. Cl.: C23C 18/20, C08J 7/14, C23C 18/26

(54) **ETCHING COMPOSITION COMPRISING AT LEAST ONE IONIC LIQUID AND AT LEAST ONE LACTAMIDE AND PROCESS FOR COATING PLASTIC SURFACES WITH METALS BY USING THE SAME**

(71) Applicant: BASF SE, 67056 Ludwigshafen am Rhein (DE)
(72) Inventor: The designation of the inventor has not yet been filed
(74) Representative: BASF IP Association

(57) **Abstract**

The invention relates to an etching composition comprising at least one ionic liquid (IL) and at least one lactamide, and a process for coating plastic surfaces with metals by using the etching composition comprising at least one ionic liquid and at least one lactamide.

## Description

### Technical Field

The invention relates to an etching composition comprising at least one ionic liquid (IL) and at least one lactamide, and a process for coating plastic surfaces with metals by using the etching composition comprising at least one ionic liquid and at least one lactamide.

### Background Art

Plastic can be converted to virtually any desired shape by simple processing methods such as injection molding or extrusion. The coating of the surfaces of plastic parts with metals, also called plastic galvanizing, is becoming increasingly important. By plastic galvanizing methods, composite materials which combine advantages of plastics and metals are obtained.

A critical process step in plastic galvanizing is the pretreatment of the plastic surface. One reason why a pretreatment is necessary is to improve, and typically to actually enable, the adhesion of the metal on the plastic surface. For this purpose, the plastic surface is roughened and should obtain more hydrophilic properties. In this context, the formation of a defined homogeneous structure in the form of recesses on the plastic surface is particularly crucial. These recesses serve, in the later metallization steps, as the starting point for the growth of the metal nuclei.

Since roughening has also been conducted by mechanical methods at an earlier stage, swelling and etching of the plastic surface with chemicals has nowadays become established for this purpose. The most commonly used etchant is the chromium-sulfuric acid etchant (chromium trioxide in sulfuric acid), especially for ABS (acrylonitrile-butadiene-styrene copolymer) or else polycarbonate. Chromium-sulfuric acid etchant is very toxic and requires special precautions in the process procedure, aftertreatment and disposal. Because of chemical processes in the etching process, for example the reduction of the chromium compound used, the chromium-sulfuric acid etchant is used up and is generally not reusable.

Also known is the use of ionic liquids for pretreatment (etching) of plastic surfaces in the context of a metallization. US20180202048A1 describes a process for coating plastic surfaces with metals by using an etching composition comprising at least one ionic liquid. The etching composition can additionally comprise at least one solvent selected from water, propylene carbonate, polyethylene glycols, mono-, di- or triesters of glycol and C₁-C₆ carboxylic acids, ethylene glycol, diethylene glycol, triethylene glycol and tetraethylene glycol.

However, there remains a need to provide an improved process for coating plastic surfaces with metals in terms of fully plated plastic surface and metal adhesion.

### Description of Figures

Figure 1 shows the procedure of cross-hatch tape test.

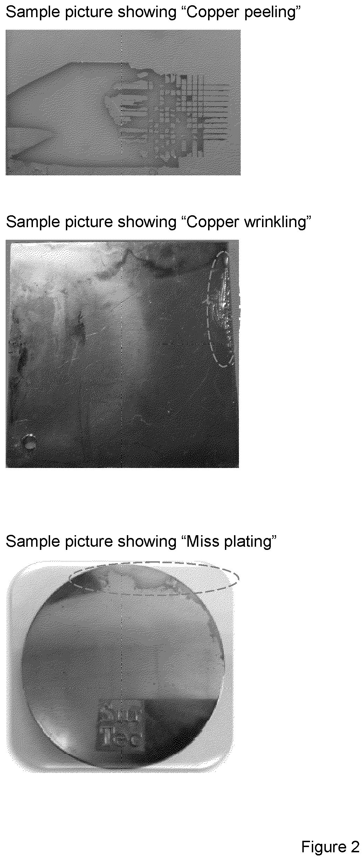

Figure 2 shows the sample pictures of "Copper peeling", "Copper wrinkling" and "Miss Plating".

### Summary of the invention

An object of the present invention is to provide an improved process for coating plastic surfaces with metals in terms of fully plated plastic surface and metal adhesion.

It has been found that the object of the present invention can be achieved by an etching composition comprising at least one ionic liquid and at least one lactamide.

Particularly, the present invention relates to following aspects.

In a first aspect, the present invention provides an etching composition comprising at least one ionic liquid and at least one lactamide of the general formula (I⁰):

CH₃-CH(-OH)-C(=O)-NR⁰₂ (I⁰),

wherein the variable R° can be the same or different and independently represents alkyl groups having 1-6 carbon atoms.

In a second aspect, the present invention provides a process for coating plastic surfaces with metals, comprising the steps of
a) pretreating the plastic surface with the etching composition comprising at least one ionic liquid and at least one lactamide of the general formula (I⁰);
b) treating the plastic surface from step a) with an aqueous rinse solution RS while applying ultrasound;
c) treating the plastic surface from step b) with an activator composition A comprising at least one ionogenic and/or colloidal activator;
d) treating the plastic surface from step c) with an accelerator composition B comprising an acid and/or a reducing agent;
e) chemically depositing a metal layer by treating the surface from step d) with a coating composition M1 comprising at least one metal salt and at least one reducing agent;
f) electrochemically coating the surface from step e) with at least one further metal layer by electrochemically treating the surface from step e) with at least one coating composition M' comprising at least one metal compound.

In a third aspect, the present invention provides use of at least one lactamide of the general formula (I⁰) in the etching composition for coating plastic surfaces with metals.

It has been surprisingly found that when used for coating plastic surfaces with metals, the etching composition according to the present invention can achieve improvements in terms of fully plated plastic surface and metal adhesion.

### Detailed Description of the Invention

The present invention now will be described in details hereinafter. It is to be understood that the present invention may be embodied in many different ways and shall not be construed as limited to the embodiments set forth herein. Unless mentioned otherwise, all technical and scientific terms used herein have the same meaning as commonly understood by one of ordinary skill in the art to which this invention belongs.

As used herein, the singular forms "a", "an", and "the" include plural referents unless the context clearly dictates otherwise.

As used herein, the terms "comprise", "comprising", etc. are used interchangeably with "contain", "containing", etc. and are to be interpreted in a non-limiting, open manner. That is, e.g., further components or elements may be present. The expressions "consists of" or "consists essentially of" or cognates may be embraced within "comprises" or cognates.

The first aspect of the present invention provides an etching composition comprising at least one ionic liquid and at least one lactamide of the general formula (I⁰):

CH₃-CH(-OH)-C(=O)-NR⁰₂ (I⁰),

wherein the variable R° can be the same or different and independently represents alkyl groups having 1-6 carbon atoms.

### Lactamide

In the general formula (I⁰), the variable R⁰ represents alkyl groups having 1-6, preferably 1-4, more preferably 1 or 2 carbon atoms. The most preferable lactamide of the general formula (I⁰) is N,N-dimethyl lactamide.

### Ionic liquid

The etching composition in the invention comprises at least one salt having a melting point of less than 100°C at 1 bar (called ionic liquid IL hereinafter).

Preferably, the ionic liquid IL has a melting point of less than 100°C, more preferably less than 85°C and most preferably less than 60°C, in each case at 1 bar (standard conditions).

The molar mass of the ionic liquid IL is preferably less than 2000 g/mol, more preferably less than 1500 g/mol, more preferably less than 1000 g/mol and most preferably less than 750 g/mol; in a particular embodiment, the molar mass is between 100 and 750 g/mol or between 100 and 500 g/mol.

Preferred ionic liquids IL comprise at least one organic compound as a cation; most preferably, they comprise exclusively organic compounds as cations. Suitable organic cations are especially organic compounds having heteroatoms, such as nitrogen, sulfur or phosphorus; particular preference is given to organic compounds having a cationic group selected from an ammonium group, a sulfonium group and a phosphonium group. The ionic liquid IL may especially comprise salts of the general formula [A]ₙ⁺[X]ⁿ⁻ where n is 1, 2, 3 or 4, [A]⁺ is an ammonium cation, a sulfonium cation or a phosphonium cation, and [X]ⁿ⁻ is a mono-, di-, tri- or tetravalent anion.

The ionic liquid IL may also comprise mixed salts comprising at least two different organic cations [A]⁺ or mixed salts comprising at least one organic cation [A]⁺ and one or two different mono-, di-, tri- or tetravalent metal cations [M]ⁿ⁺.

In a preferred embodiment, the at least one ionic liquid IL is at least one salt having a cation selected from imidazolium cations, pyridinium cations, pyrazolium cations and alkylammonium cations.

Preferably, the ionic liquid IL comprises, as cation, at least one, preferably exactly one, alkylammonium cation. In the context of the present invention, alkylammonium cation is understood to mean ammonium compounds having at least one C₁₋₂₀-alkyl radical, preferably a C₁₋₁₈-alkyl radical, and a localized positive charge on the nitrogen atom. The compounds may be those having tetravalent nitrogen (quaternary ammonium compounds) or else be compounds having trivalent nitrogen, where one bond is a double bond. Preferably, the alkylammonium cation of the ionic liquid IL is a nonaromatic compound.

Useful ring systems include monocyclic, bicyclic, nonaromatic ring systems. Examples include bicyclic systems as described in WO 2008/043837. The bicyclic systems of WO 2008/043837 are diazabicyclo derivatives, preferably composed of one 7-membered and one 6-membered ring comprising an amidinium group; a particular example is the 1,8-diazabicyclo(5.4.0)undec-7-enium cation.

Preferably, the ionic liquid IL comprises, as the sole cation, exactly one alkylammonium cation. The ionic liquid IL may alternatively be a mixed salt comprising at least one alkylammonium cation and at least one further organic cation [A]⁺ and/or at least one further metal cation [M]ⁿ⁺. Particularly preferred organic cations are quaternary ammonium cations having preferably four C₁₋₁₂-alkyl groups as substituents on the nitrogen atom.

Preference is given to an ionic liquid IL of the general formula (I) 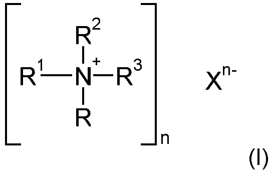 where
- R: is an organic group comprising 1 to 20, preferably 1 to 18, more preferably 1 to 12 and especially preferably 1 to 6 carbon atoms, where the organic group is a saturated or unsaturated, acyclic or cyclic aliphatic radical which may be unsubstituted or may be interrupted or substituted by 1 to 5 heteroatoms or functional groups;
- R¹, R² and R³: are each independently:
hydrogen;
a C₁-C₁₈-alkyl radical which may optionally be substituted by functional groups selected from C₁-C₆-alkyl, C₁-C₆-alkyloxy, C₁-C₆-alkoxycarbonyl, hydroxyl, halogen, amino, cyano and sulfo and/or may be interrupted by one or more oxygen and/or sulfur atoms and/or one or more substituted or unsubstituted imino groups;
a C₂-C₁₈-alkenyl radical which may optionally be substituted by functional groups selected from C₁-C₆-alkyl, C₁-C₆-alkyloxy, C₁-C₆-alkoxycarbonyl, hydroxyl, halogen, amino, cyano and sulfo and/or may be interrupted by one or more oxygen and/or sulfur atoms and/or one or more substituted or unsubstituted imino groups;
a C₅-C₁₂-cycloalkyl radical which may optionally be substituted by functional groups selected from C₁-C₆-alkyl, C₁-C₆-alkyloxy, C₁-C₆-alkoxycarbonyl, hydroxyl, halogen, amino, cyano and sulfo;
a C₅-C₁₂-cycloalkenyl radical which may optionally be substituted by functional groups selected from C₁-C₆-alkyl, C₁-C₆-alkyloxy, C₁-C₆-alkoxycarbonyl, hydroxyl, halogen, amino, cyano and sulfo; or
a five- to six-membered heterocycle which includes oxygen, nitrogen and/or sulfur atoms and may optionally be substituted by functional groups selected from C₁-C₆-alkyl, C₁-C₆-alkyloxy, C₁-C₆-alkoxycarbonyl, hydroxyl, halogen, amino, cyano and sulfo,
or two adjacent R¹, R² and R³ radicals together with the nitrogen atom in formula (I) are an unsaturated or saturated five- to seven-membered ring which may optionally be substituted by functional groups selected from C₁-C₆-alkyl, C₁-C₆-alkyloxy, C₁-C₆-alkoxycarbonyl, hydroxyl, halogen, amino, cyano and sulfo and may optionally be interrupted by one or more oxygen and/or sulfur atoms and/or one or more substituted or unsubstituted imino groups;
- X: is an anion; and
- n: is 1, 2 or 3.

Possible heteroatoms in the definition of the R and R¹ to R³ radicals are in principle any heteroatoms capable in a formal sense of replacing a -CH₂-, a -CH=, a -C= or a =C= group. If the carbon-comprising radical comprises heteroatoms, preference is given to oxygen, nitrogen, sulfur, phosphorus and silicon. Preferred groups especially include -O-, -S-, -SO-, -SO₂-, -NR'-,-N=, -PR'-, -POR'- and -SiR'₂-, where the R' radicals are the remaining portion of the radical comprising carbon atoms. In cases in which the R¹ to R³ radicals in the abovementioned formulae (I) are bonded to a carbon atom and not to a heteroatom, they can also be bonded directly via the heteroatom.

Possible functional groups are in principle all functional groups which can be bonded to a carbon atom or a heteroatom. Suitable examples include -OH (hydroxyl), =O (especially in the form of a carbonyl group), -NH₂ (amino), =NH (imino), -COOH (carboxyl), -CONH₂ (carboxamide), -SO₃H (sulfo) and -CN (cyano). Functional groups and heteroatoms may also be directly adjacent, and so combinations of a plurality of adjacent atoms, for instance -O- (ether),-S- (thioether), -COO- (ester), -CONH- (secondary amide) or -CONR'- (tertiary amide), are encompassed as well, for example di(C₁-C₄-alkyl)amino, C₁-C₄-alkyloxycarbonyl or C₁-C₄-alkyloxy.

Halogens are fluorine, chlorine, bromine and iodine.

Preferably, the R radical is
an unbranched or branched C₁-C₂₀-alkyl radical which is unsubstituted or mono- to polysubstituted by hydroxyl, halogen, cyano, C₁-C₆-alkoxycarbonyl and/or sulfo and preferably has a total of 1 to 20 carbon atoms, for example methyl, ethyl, 1-propyl, 2-propyl, 1-butyl, 2-butyl, 2-methyl-1-propyl (isobutyl), 2-methyl-2-propyl (tert-butyl), 1-pentyl, 2-pentyl, 3-pentyl, 2-methyl-1-butyl, 3-methyl-1-butyl, 2-methyl-2-butyl, 3-methyl-2-butyl, 2,2-dimethyl-1-propyl, 1-hexyl, 2-hexyl, 3-hexyl, 2-methyl-1-pentyl, 3-methyl-1-pentyl, 4-methyl-1-pentyl, 2-methyl-2-pentyl, 3-methyl-2-pentyl, 4-methyl-2-pentyl, 2-methyl-3-pentyl, 3-methyl-3-pentyl, 2,2-dimethyl-1-butyl, 2,3-dimethyl-1-butyl, 3,3-dimethyl-1-butyl, 2-ethyl-1-butyl, 2,3-dimethyl-2-butyl, 3,3-dimethyl-2-butyl, 1-heptyl, 1-octyl, 1-nonyl, 1-decyl, 1-undecyl, 1-dodecyl, 1-tetradecyl, 1-hexadecyl, 1-octadecyl, 2-hydroxyethyl, 2-cyanoethyl, 2-(methoxycarbonyl)ethyl, 2-(ethoxycarbonyl)ethyl, 2-(n-butoxycarbonyl)ethyl and 6-hydroxyhexyl;
vinyl;
or an unsubstituted C₅-C₁₂-cycloalkenyl radical.

More preferably, the R radical is unbranched and unsubstituted C₁-C₁₈-alkyl, preferably C₁-C₁₂-alkyl, for example methyl, ethyl, 1-propyl, 1-butyl, 1-pentyl, 1-hexyl, 1-heptyl, 1-octyl, or is CH₃O-(CH₂CH₂O)ₚ-CH₂CH₂- and CH₃CH₂O-(CH₂CH₂O)ₚ-CH₂CH₂- with p = 0 to 3.

Preferably, the R¹, R² and R³ radicals are each independently
hydrogen;
a C₁-C₁₈-alkyl radical which may optionally be mono- to polysubstituted by functional groups selected from C₁-C₆-alkyl, C₁-C₆-alkyloxy, C₁-C₆-alkoxycarbonyl, hydroxyl, halogen, amino, cyano and sulfo, for example methyl, ethyl, 1-propyl, 2-propyl, 1-butyl, 2-butyl, 2-methyl-1-propyl (isobutyl), 2-methyl-2-propyl (tert-butyl), 1-pentyl, 2-pentyl, 3-pentyl, 2-methyl-1-butyl, 3-methyl-1-butyl, 2-methyl-2-butyl, 3-methyl-2-butyl, 2,2-dimethyl-1-propyl, 1-hexyl, 2-hexyl, 3-hexyl, 2-methyl-1-pentyl, 3-methyl-1-pentyl, 4-methyl-1-pentyl, 2-methyl-2-pentyl, 3-methyl-2-pentyl, 4-methyl-2-pentyl, 2-methyl-3-pentyl, 3-methyl-3-pentyl, 2,2-dimethyl-1-butyl, 2,3-dimethyl-1-butyl, 3,3-dimethyl-1-butyl, 2-ethyl-1-butyl, 2,3-dimethyl-2-butyl, 3,3-dimethyl-2-butyl, 1-heptyl, 1-octyl, 1-nonyl, 1-decyl, 1-undecyl, 1-dodecyl, 1-tetradecyl, 1-hexadecyl, 1-octadecyl, 2-hydroxyethyl, 2-cyanoethyl, 2-cyanopropyl, 2-(methoxycarbonyl)ethyl, 2-(ethoxycarbonyl)ethyl, 2-(n-butoxycarbonyl)ethyl, 2-hydroxyethyl, 2-hydroxypropyl, 3-hydroxypropyl, 4-hydroxybutyl, 6-hydroxyhexyl, 2-aminoethyl, 2-aminopropyl, 3-aminopropyl, 4-aminobutyl, 6-aminohexyl, 2-methylaminoethyl, 2-methylaminopropyl, 3-methylaminopropyl, 4-methylaminobutyl, 6-methylaminohexyl, 2-dimethylaminoethyl, 2-dimethylaminopropyl, 3-dimethylaminopropyl, 4-dimethylaminobutyl, 6-dimethylaminohexyl, 2-hydroxy-2,2-dimethylethyl, 2-methoxyethyl, 2-methoxypropyl, 3-methoxypropyl, 4-methoxybutyl, 6-methoxyhexyl, 2-ethoxyethyl, 2-ethoxypropyl, 3-ethoxypropyl, 4-ethoxybutyl, 6-ethoxyhexyl, chloromethyl, 2-chloroethyl, trichloromethyl, 1,1-dimethyl-2-chloroethyl, methoxymethyl, 2-butoxyethyl, diethoxymethyl, diethoxyethyl, 2-isopropoxyethyl, 2-butoxypropyl, 2-octyloxyethyl and 2-methoxyisopropyl;
a C₅-C₁₂-cycloalkyl radical which may optionally be substituted by C₁-C₆-alkyl; for example cyclopentyl and cyclohexyl;
or two adjacent R¹, R² and R³ radicals together with the nitrogen atom in formula (I) are a saturated unsubstituted five- to seven-membered ring; for example, two adjacent R¹, R² and R³ radicals are 1,4-butylene, 1,5-pentylene or 3-oxa-1,5-pentylene.

In one embodiment, two adjacent R¹, R² and R³ radicals together with the nitrogen atom in formula (I) may be an unsaturated or saturated five- to seven-membered ring which may optionally be substituted by functional groups selected from C₁-C₆-alkyl, C₁-C₆-alkyloxy, C₁-C₆-alkoxycarbonyl, hydroxyl, halogen, amino, cyano and sulfo and may optionally be interrupted by one or more oxygen and/or sulfur atoms and/or one or more substituted or unsubstituted imino groups. Preferably, two adjacent R¹, R² and R³ radicals together with the nitrogen atom in formula (I) form a saturated five- to seven-membered ring and two adjacent R¹, R² and R³ radicals are 1,4-butylene, 1,5-pentylene or 3-oxa-1,5-pentylene.

Most preferably, the R¹, R² and R³ radicals are each independently hydrogen, unsubstituted C₁-C₁₈-alkyl, preferably C₁-C₁₂-alkyl (for example methyl, ethyl, 1-butyl, 1-pentyl, 1-hexyl, 1-heptyl, 1-octyl), 2-hydroxyethyl, 2-cyanoethyl, 2-(methoxycarbonyl)ethyl, 2-(ethoxycarbonyl)ethyl, 2-(n-butoxycarbonyl)ethyl, chlorine, CH₃O-(CH₂CH₂O)ₚ-CH₂CH₂- or CH₃CH₂O-(CH₂CH₂O)ₚ-CH₂CH₂-where p = 0 to 3 or two adjacent R¹, R² and R³ radicals are 1,4-butylene, 1,5-pentylene or 3-oxa-1,5-pentylene.

More preferably, R¹, R² and R³ are a hydrogen atom or an above-described hydrocarbyl group having no further heteroatoms. Most preferably, R¹, R² and R³ are a hydrogen atom or an unsubstituted C₁-C₁₈ alkyl group, more preferably a C₁-C₆ alkyl group, for example a methyl group, ethyl group, propyl group, isopropyl group or n-butyl group.

The alkylammonium cation of the ionic liquid IL may also be a heterocyclic ring system comprising at least one and preferably one or two tetra- and/or trivalent nitrogen(s), where one bond is a double bond. For example, the cation of the ionic liquid IL may be a cyclic nonaromatic alkylammonium cation selected from the group consisting of piperidinium cations, pyrazolium cations, pyrazolinium cations, imidazolinium cations, pyrrolidinium cations, imidazolidinium cations, guanidiumium cations and cholinium cations.

Suitable cations of the at least one ionic liquid IL are, for example, the cations of the general formulae (IIa) to (IIj) 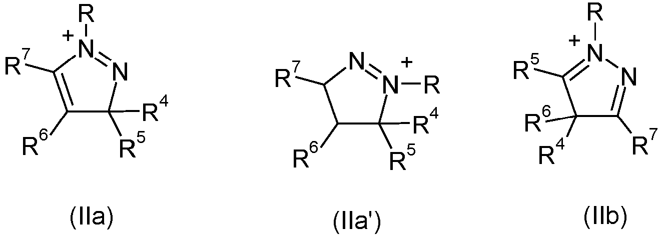 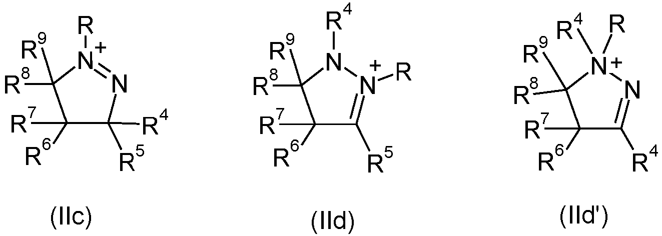 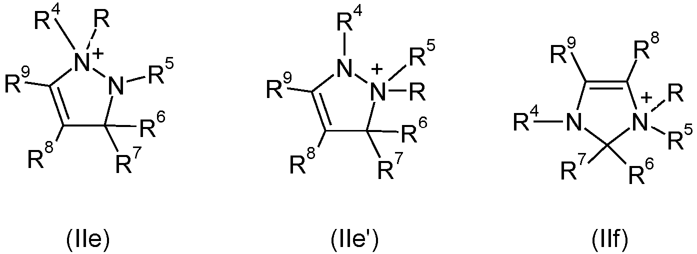 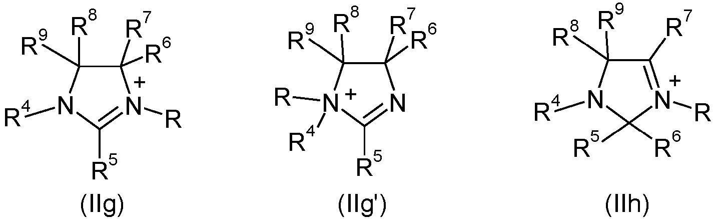 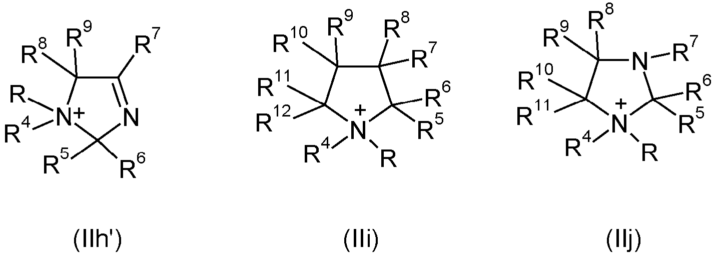 where R is as defined above and the R⁴, R⁵, R⁶, R⁷, R⁸, R⁹, R¹⁰, R¹¹ and R¹² radicals are each as defined above for the R¹, R² and R³ radicals.

Most preferably, the ionic liquid IL comprises, as cation, a five- or six-membered heterocyclic aromatic ring system having one, two or three, preferably one or two, nitrogen atoms as part of the ring system. In principle, the five- or six-membered heterocyclic aromatic ring system may comprise one or two further heteroatoms, especially oxygen and/or sulfur atoms. The carbon atoms of the aromatic ring system may be substituted by organic groups having generally not more than 20 carbon atoms, preferably by a hydrocarbyl group, especially a C₁-C₁₆ alkyl group, especially a C₁-C₁₀ and more preferably a C₁-C₄ alkyl group.

Suitable cations of the at least one ionic liquid IL are, for example, the cations of the general formulae (Ilk) to (Ils') 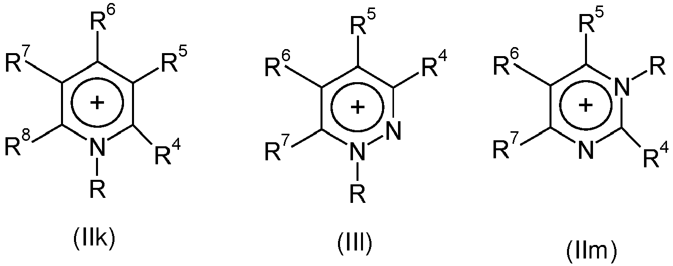 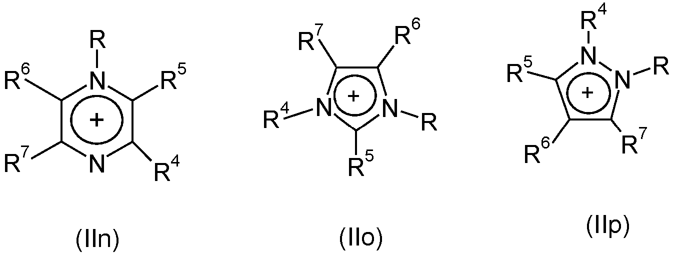 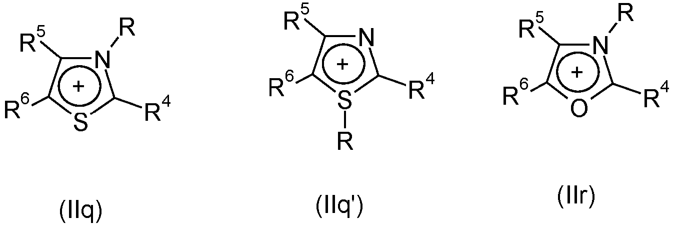 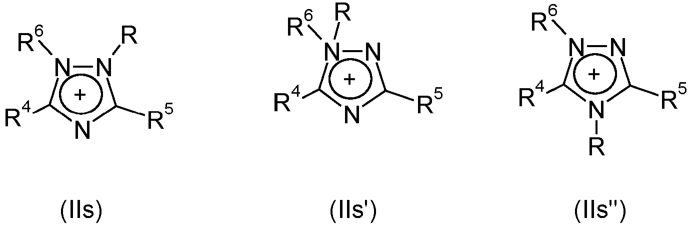 where R is as defined above and the R⁴, R⁵, R⁶, R⁷ and R⁸ radicals are each as defined above for the R¹, R² and R³ radicals. Preferably, the R⁴, R⁵, R⁶, R⁷ and R⁸ radicals are each independently selected from hydrogen, methyl, ethyl, 1-propyl, 1-butyl and chlorine.

Preferably, the cation of the at least one ionic liquid IL2 is a cation of the abovementioned formulae (Ilk), (IIo), (Ilp), (Ilq), (Ilq') and (IIr), most preferably a cation of the formula (IIo).

Very particular preference is given to ionic liquids IL in which the cation is a pyridinium cation of the formula (Ilk) where
one of the R⁴, R⁵, R⁶, R⁷ and R⁸ radicals is methyl, ethyl or chlorine and the remaining R⁴, R⁵, R⁶, R⁷ and R⁸ radicals are hydrogen; or
R⁶ is dimethylamino and the remaining R⁴, R⁵, R⁷ and R⁸ radicals are hydrogen; or
all the R⁴, R⁵, R⁶, R⁷ and R⁸ radicals are hydrogen; or
R⁵ is carboxyl or carboxamide and the remaining R⁴, R⁶, R⁷ and R⁸ radicals are hydrogen; or
R⁴ and R⁵ or R⁵ and R⁶ are 1,4-buta-1,3-dienylene and the remaining R⁴, R⁵, R⁶, R⁷ and R⁸ radicals are hydrogen.

Especially preferred are ionic liquids IL in which the cation is a pyridinium cation of the formula (Ilk) where
all the R⁴, R⁵, R⁶, R⁷ and R⁸ radicals are hydrogen; or
one of the R⁴, R⁵, R⁶, R⁷ and R⁸ radicals is methyl or ethyl and the remaining R⁴, R⁵, R⁶, R⁷ and R⁸ radicals are hydrogen.

Very particularly preferred pyridinium cations (Ilk) include 1-methylpyridinium, 1-ethylpyridinium, 1-(1-butyl)pyridinium, 1-(1-octyl)pyridinium, 1-(1-hexyl)pyridinium, 1-(1-octyl)pyridinium,1-(1-dodecyl)pyridinium, 1-(1-tetradecyl)pyridinium, 1-(1-hexadecyl)pyridinium, 1,2-dimethylpyridinium, 1-ethyl-2-methylpyridinium, 1-(1-butyl)-2-methylpyridinium, 1-(1-hexyl)-2-methylpyridinium, 1-(1-octyl)-2-methylpyridinium, 1-(1-dodecyl)-2-methylpyridinium, 1-(1-tetradecyl)-2-methylpyridinium, 1-(1-hexadecyl)-2-methylpyridinium, 1-methyl-2-ethylpyridinium, 1,2-diethylpyridinium, 1-(1-butyl)-2-ethylpyridinium, 1-(1-hexyl)-2-ethylpyridinium, 1-(1-octyl)-2-ethylpyridinium, 1-(1-dodecyl)-2-ethylpyridinium, 1-(1-tetradecyl)-2-ethylpyridinium, 1-(1-hexadecyl)-2-ethylpyridinium, 1,2-dimethyl-5-ethylpyridinium, 1,5-diethyl-2-methylpyridinium, 1-(1-butyl)-2-methyl-3-ethylpyridinium, 1-(1-hexyl)-2-methyl-3-ethylpyridinium and 1-(1-octyl)-2-methyl-3-ethylpyridinium, 1-(1-dodecyl)-2-methyl-3-ethylpyridinium, 1-(1-tetradecyl)-2-methyl-3-ethylpyridinium and 1-(1-hexadecyl)-2-methyl-3-ethylpyridinium.

Especially preferred are ionic liquids IL in which the cation is a pyridazinium cation of the formula (III) where
all the R⁴, R⁵, R⁶ and R⁷ radicals are hydrogen; or
one of the R⁴, R⁵, R⁶ and R⁷ radicals is methyl or ethyl and the remaining R⁴, R⁵, R⁶ and R⁷ radicals are hydrogen.

Especially preferred are ionic liquids IL in which the cation is a pyrimidinium cation of the formula (IIm) where
R⁴ is hydrogen, methyl or ethyl and R⁵, R⁶ and R⁷ are each independently hydrogen or methyl; or
R⁴ is hydrogen, methyl or ethyl, R⁵ and R⁶ are methyl and R⁷ is hydrogen.

Especially preferred are ionic liquids IL in which the cation is a pyrazinium cation of the formula (Iln) where
R⁴ is hydrogen, methyl or ethyl and R⁵, R⁶ and R⁷ are each independently hydrogen or methyl; or
R⁴ is hydrogen, methyl or ethyl, R⁵ and R⁶ are methyl and R⁷ is hydrogen; or
R⁴, R⁵, R⁶ and R⁷ are methyl, or
R⁴, R⁵, R⁶ and R⁷ are hydrogen.

Especially preferred are ionic liquids IL in which the cation is an imidazolium cation of the formula (IIo) where
R⁴ is hydrogen, methyl, ethyl, 1-propyl, 1-butyl, 1-pentyl, 1-hexyl, 1-octyl, 2-hydroxyethyl or 2-cyanoethyl and R⁵, R⁶ and R⁷ are each independently hydrogen, methyl or ethyl.

Very particularly preferred imidazolium cations (IIo) include 1-methylimidazolium, 1-ethylimidazolium, 1-(1-butyl)imidazolium, 1-(1-octyl)imidazolium, 1-(1-dodecyl)imidazolium, 1-(1-tetradecyl)imidazolium, 1-(1-hexadecyl)imidazolium, 1,3-dimethylimidazolium, 1-ethyl-3-methylimidazolium, 1-(1-butyl)-3-methylimidazolium, 1-(1-butyl)-3-ethylimidazolium, 1-(1-hexyl)-3-methylimidazolium, 1-(1-hexyl)-3-ethylimidazolium, 1-(1-hexyl)-3-butylimidazolium, 1-(1-octyl)-3-methylimidazolium, 1-(1-octyl)-3-ethylimidazolium, 1-(1-octyl)-3-butylimidazolium, 1-(1-dodecyl)-3-methylimidazolium, 1-(1-dodecyl)-3-ethylimidazolium, 1-(1-dodecyl)-3-octylimidazolium, 1-(1-tetradecyl)-3-methylimidazolium, 1-(1-tetradecyl)-3-ethylimidazolium, 1-(1-tetradecyl)-3-butylimidazolium, 1-(1-tetradecyl)-3-octylimidazolium, 1-(1-hexadecyl)-3-methylimidazolium, 1-(1-hexadecyl)-3-ethylimidazolium, 1-(1-hexadecyl)-3-butylimidazolium, 1-(1-hexadecyl)-3-octylimidazolium, 1,2-dimethylimidazolium, 1,2,3-trimethylimidazolium, 1-ethyl-2,3-dimethylimidazolium, 1-(1-butyl)-2,3-dimethylimidazolium, 1-(1-hexyl)-2,3-dimethylimidazolium, 1,4-dimethylimidazolium, 1,3,4-trimethylimidazolium, 1,4-dimethyl-3-ethylimidazolium, 3-butylimidazolium, 1,4-dimethyl-3-octylimidazolium, 1,4,5-trimethylimidazolium, 1,3,4,5-tetramethylimidazolium, 1,4,5-trimethyl-3-ethylimidazolium, 1,4,5-trimethyl-3-butylimidazolium and 1,4,5-trimethyl-3-octylimidazolium.

Especially preferred are ionic liquids IL in which the cation is a pyrazolium cation of the formula (IIp) where
R⁴ is hydrogen, methyl or ethyl and R⁵, R⁶ and R⁷ are each independently hydrogen or methyl.

Especially preferred are ionic liquids IL in which the cation is a thiazolium cation of the formula (IIq) or (IIq') or an oxazolium cation of the formula (IIr) where
R⁴ is hydrogen, methyl, ethyl or phenyl and R⁵, R⁶ and R⁷ are each independently hydrogen or methyl.

Especially preferred are ionic liquids IL in which the cation is a 1,2,4-triazolium cation of the formula (Ils), (Ils') or (Ils") where
R⁴ and R⁵ are each independently hydrogen, methyl, ethyl or phenyl and R⁶ is hydrogen, methyl or phenyl.

Usable anions, especially as anion Xⁿ⁻, are in principle any anions which, in conjunction with the cation, lead to an ionic liquid.

The anion, especially the anion Xⁿ⁻, may be an organic or inorganic anion. Particularly preferred ionic liquids consist exclusively of the salt of an organic cation with one of the anions specified below.

The anion, especially the anion Xⁿ⁻, is, for example, selected from:
the group of the halides and halogen compounds of the formulae:
   F; Cl⁻; Br; I⁻; BF₄⁻; PF₆⁻; AlCl₄⁻; Al₂Cl₇⁻, Al₃Cl₁₀⁻, AlBr₄⁻; CF₃SO₃⁻, (CF₃SO₃)₂N-, CF₃CO₂⁻, CCl₃CO₂⁻, CN⁻, SCN⁻, OCN⁻, NO₂⁻, NO₃⁻;
the group of the sulfates, sulfites and sulfonates of the formulae:
   SO₄²⁻, HSO₄⁻, SO₃²⁻, HSO₃⁻, R^{a}OSO₃⁻, R^{a}SO₃⁻;
the group of the phosphates of the formulae:
   PO₄³⁻, HPO₄²⁻, H₂PO₄⁻, R^{a}PO₄²⁻, HR^{a}PO₄-, R^{a}R^{b}PO₄⁻;
the group of the phosphonates and phosphinates of the formulae:
   R^{a}HPO₃⁻, R^{a}R^{b}PO₂⁻; R^{a}R^{b}PO₃⁻;
the group of the carboxylates of the general formula:
   R^{a}COO⁻;
the group of the borates of the general formulae:
   BO₃³⁻, HBO₃²⁻, H₂BO₃⁻, R^{a}R^{b}BO₃⁻, RaHBO₃⁻, RaBO₃²⁻, B(OR^{a})(OR^{b})(OR^{c})(OR^{d})⁻, B(HSO₄)⁻, B(R^{a}SO₄)⁻ ;
the group of the boronates of the general formulae:
   R^{a}BO₂²⁻, R^{a}R^{b}BO⁻;
the group of the carbonates and carbonic esters of the general formulae:
   HCO₃⁻, CO₃²; R^{a}CO₃⁻;
the group of the carboximides, bis(sulfonyl)imides and sulfonylimides of the general formulae: 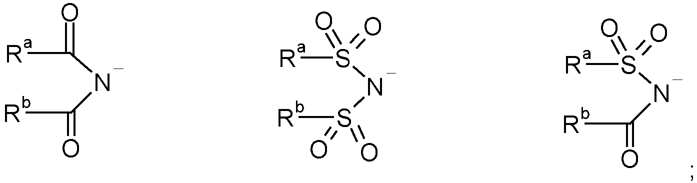
the group of the alkoxides and aryl oxides of the general formula:
   R^{a}O-;
where R^{a}, R^{b}, R^{c} and R^{d} in the aforementioned anions are each independently selected from:
hydrogen or C₁-C₁₂-alkyl and the cycloalkyl-, halogen-, hydroxyl-, amino-, carboxyl-, formyl-, -O-, -CO-, -CO-O- or -CO-N<-substituted components thereof, for example methyl, ethyl, 1-propyl, 2-propyl, 1-butyl, 2-butyl, 2-methyl-1-propyl (isobutyl), 2-methyl-2-propyl (tert-butyl), 1-pentyl, 2-pentyl, 3-pentyl, 2-methyl-1-butyl, 3-methyl-1-butyl, 2-methyl-2-butyl, 3-methyl-2-butyl, 2,2-dimethyl-1-propyl, 1-hexyl, 2-hexyl, 3-hexyl, 2-methyl-1-pentyl, 3-methyl-1-pentyl, 4-methyl-1-pentyl, 2-methyl-2-pentyl, 3-methyl-2-pentyl, 4-methyl-2-pentyl, 2-methyl-3-pentyl, 3-methyl-3-pentyl, 2,2-dimethyl-1-butyl, 2,3-dimethyl-1-butyl, 3,3-dimethyl-1-butyl, 2-ethyl-1-butyl, 2,3-dimethyl-2-butyl, 3,3-dimethyl-2-butyl, heptyl, octyl, nonyl, decyl, undecyl, dodecyl, methoxy, ethoxy, formyl, acetyl or CF₃.

More preferably, R^{a}, R^{b}, R^{c} and R^{d} in the aforementioned anions are each independently a hydrogen atom or an unsubstituted C₁-C₁₂-alkyl group, preferably C₁-C₆-alkyl group.

Particularly preferred anions, especially very particularly preferred anions Xⁿ⁻, are:
chloride, bromide, hydrogensulfate, tetrachloroaluminate, thiocyanate, methylcarbonate, methylsulfate, ethylsulfate, methanesulfonate, formate, acetate, dimethylphosphate, diethylphosphate, p-tolylsulfonate, tetrafluoroborate, hexafluorophosphate, bis(trifluoromethylsulfonyl)imide and bis(methylsulfonyl)imide.

Very particularly preferred anions, especially very particularly preferred anions Xⁿ⁻, are: chloride, hydrogensulfate, methylsulfate, ethylsulfate, methanesulfonate, formate and acetate.

Especially preferred are ionic liquids IL comprising, as cation, at least one cation, preferably exactly one cation, selected from the group consisting of
1-methylimidazolium, 1-ethylimidazolium, 1-(1-butyl)imidazolium, 1-(1-octyl)imidazolium, 1-(1-dodecyl)imidazolium, 1-(1-tetradecyl)imidazolium, 1-(1-hexadecyl)imidazolium, 1,3-dimethylimidazolium, 1-ethyl-3-methylimidazolium, 1-(1-butyl)-3-methylimidazolium, 1-(1-butyl)-3-ethylimidazolium, 1-(1-hexyl)-3-methylimidazolium, 1-(1-hexyl)-3-ethylimidazolium, 1-(1-hexyl)-3-butylimidazolium, 1-(1-octyl)-3-methylimidazolium, 1-(1-octyl)-3-ethylimidazolium, 1-(1-octyl)-3-butylimidazolium, 1-(1-dodecyl)-3-methylimidazolium, 1-(1-dodecyl)-3-ethylimidazolium, 1-(1-dodecyl)-3-butylimidazolium, 1-(1-dodecyl)-3-octylimidazolium, 1-(1-tetradecyl-3-methylimidazolium, 1-(1-tetradecyl)-3-ethylimidazolium, 1-(1-tetradecyl)-3-butylimidazolium, 1-(1-tetradecyl-3-octylimidazolium, 1-(1-hexadecyl)-3-methylimidazolium, 1-(1-hexadecyl)-3-ethylimidazolium, 1-(1-hexadecyl)-3-butylimidazolium, 1-(1-hexadecyl-3-octylimidazolium, 1,2-dimethylimidazolium, 1,2,3-trimethylimidazolium, 1-ethyl-2,3-dimethylimidazolium, 1-(1-butyl)-2,3-dimethylimidazolium, 1-(1-hexyl)-2,3-dimethylimidazolium, 1-(1-octyl)-2,3-dimethylimidazolium, 1,4-dimethylimidazolium, 1,3,4-trimethylimidazolium, 1,4-dimethyl-3-ethylimidazolium, 3-butylimidazolium, 1,4-dimethyl-3-octylimidazolium, 1,4,5-trimethylimidazolium, 1,3,4,5-tetramethylimidazolium, 1,4,5-trimethyl-3-ethylimidazolium, 1,4,5-trimethyl-3-butylimidazolium, 1,4,5-trimethyl-3-octylimidazolium; and 1-butyl-1-methylpyrrolidinium;
and, as anion, at least one anion, preferably exactly one anion, selected from the group consisting of
chloride, bromide, hydrogensulfate, tetrachloroaluminate, thiocyanate, methylsulfate, ethylsulfate, methanesulfonate, formate, acetate, dimethylphosphate, diethylphosphate, p-tolylsulfonate, tetrafluoroborate and hexafluorophosphate.

Particular preference is additionally given to ionic liquids IL selected from the group consisting of:
1,3-dimethylimidazolium methylsulfate, 1,3-dimethylimidazolium hydrogensulfate, 1,3-dimethylimidazolium dimethylphosphate, 1,3-dimethylimidazolium acetate, 1-ethyl-3-methylimidazolium methylsulfate, 1-ethyl-3-methylimidazolium ethylsulfate, 1-ethyl-3-methylimidazolium hydrogensulfate, 1-ethyl-3-methylimidazolium thiocyanate, 1-ethyl-3-methylimidazolium acetate, 1-ethyl-3-methylimidazolium methanesulfonate, 1-ethyl-3-methylimidazolium diethylphosphate, 1-(1-butyl)-3-methylimidazolium methylsulfate, 1-(1-butyl)-3-methylimidazolium hydrogensulfate, 1-(1-butyl)-3-methylimidazolium thiocyanate, 1-(1-butyl)-3-methylimidazolium acetate, 1-(1-butyl)-3-methylimidazolium methanesulfonate, methyltri(1-butyl)ammonium methylsulfate and 1-butyl-1-methylpyrrolidinium dimethyl phosphate.

In a particularly preferred embodiment, the etching composition comprises at least one ionic liquid IL selected from the group consisting of 1-ethyl-3-methylimidazolium methylsulfate, 1-ethyl-3-methylimidazolium ethylsulfate, 1-ethyl-3-methylimidazolium hydrogensulfate, 1-ethyl-3-methylimidazolium acetate, 1-ethyl-3-methylimidazolium methanesulfonate, methyltri(1-butyl)ammonium methylsulfate (MTBS) and 1-butyl-1-methylpyrrolidinium dimethyl phosphate.

In a preferred embodiment, the etching composition comprises:
50% to 90 % by weight, preferably 55 % to 85 % by weight and more preferably 60% to 80% by weight of the at least one ionic liquid, based on the overall etching composition; and
10 % to 50 % by weight, preferably 15 % to 45 % by weight, more preferably 20% to 40% by weight of at least one lactamide of the general formula (I⁰), based on the overall etching composition.

Preferably, the etching composition is a solution; more particularly, the components of etching composition are homogeneously miscible with one another or the components of etching composition are in homogeneously distributed form. More particularly, the etching composition is a solution having molecular dispersion.

The viscosity of the etching composition is preferably in the range from 20 to 200 mPas, preferably in the range from 30 to 100 mPas and more preferably in the range from 30 to 70 mPas (in each case by dynamic means at 60°C).

The melting point of the etching composition is typically below 100°C, preferably below room temperature (25°C), especially preferably below 10°C, more preferably below 0°C.

The etching composition is prepared by a standard process, for example by simply mixing the ionic liquid and lactamide with stirring. The conditions for preparing the etching composition, such as the rate of the stirring, the time and temperature of the reaction, are not particularly limited and can be conventionally selected.

In a second aspect, the present invention provides a process for coating plastic surfaces with metals, comprising the steps of
a) pretreating the plastic surface with the etching composition comprising at least one ionic liquid and at least one lactamide of the general formula (I⁰);
b) treating the plastic surface from step a) with an aqueous rinse solution RS while applying ultrasound;
c) treating the plastic surface from step b) with an activator composition A comprising at least one ionogenic and/or colloidal activator;
d) treating the plastic surface from step c) with an accelerator composition B comprising an acid and/or a reducing agent;
e) chemically depositing a metal layer by treating the surface from step d) with a coating composition M1 comprising at least one metal salt and at least one reducing agent;
f) electrochemically coating the surface from step e) with at least one further metal layer by electrochemically treating the surface from step e) with at least one coating composition M' comprising at least one metal compound.

### Plastics and metals

In the context of the present invention, a molding or a plastic molding refers to an article that has originated from a primary forming method, for example an article consisting essentially of plastic that has originated by primary forming methods, for example casting, die casting, injection molding, extrusion blow molding, extrusion, sintering, and optionally a subsequent forming method. This encompasses especially workpieces and semifinished products, for example a formed workpiece, an injection-molded workpiece, a film or a foil.

In the process of the invention, plastics, especially plastics having a nonconductive surface, are coated with a metal in a plurality of steps. They are preferably thermoplastics. Thermoplastics can be melted and converted to the desired shape by different methods, for example injection molding, extrusion, thermoforming or blow molding.

Suitable thermoplastics include polyamides, polyolefins, polyesters, polyethers, polyacetals, especially polyoxymethylene, polycarbonates, polyurethanes, polyacrylates, polystyrenes or copolymers of styrene, especially styrene/acrylonitrile copolymers (SAN), acrylic ester/styrene/acrylonitrile copolymers (ASA) and acrylonitrile/butadiene/styrene copolymers (ABS).

Polyamides include polycondensates of aminocarboxylic acids, for example of 6-aminocarboxylic acid or epsilon-caprolactam, or polycondensates of diamino compounds and dicarboxylic acids, for example of hexane-1,6-diamine and adipic acid.

Suitable polyolefins are polyethylene, polypropylene and copolymers of ethylene or propylene.

Suitable polyesters are polycondensation products of polyhydric alcohols, for example butanediol, hexanediol, glycerol or trimethylolpropane, and polybasic carboxylic acids, especially phthalic acid and isomers thereof, adipic acid or trimellitic anhydride.

A particular polyacetal is polyoxymethylene (POM).

Polycarbonates are esters of carbonic acid and polyhydric alcohols, for example bisphenol A; also mentioned are polyestercarbonates comprising further polybasic carboxylic acids as formation components.

Typically, polyethers comprise recurrent ether groups. Of particular industrial significance are, for example, polyetherimides especially comprising aromatic ring systems joined via recurrent ether and imide groups, polyether ketones especially comprising phenylene groups joined by recurrent ether and ketone groups, polyether sulfides comprising ether and thioether groups in their polymer backbone, and polyether sulfones comprising recurrent ether groups and sulfone groups in their polymer backbone.

Polyurethanes are typical polyadducts formed from polyfunctional isocyanates and polyhydric alcohols, useful examples being both aliphatic and aromatic compounds. Polyacrylates are homo- or copolymers of acrylic monomers or methacrylic monomers; a particular example is polymethylmethacrylate (PMMA).

It is also possible to carry out the process of the invention, wherein the plastic comprises (or consist of) a carbon-fibre-reinforced epoxy resin. Carbon-fibre-reinforced epoxy resins are commonly known and typically comprises 10 to 90 %, preferably about 50 to 70 % by volume, reinforcing carbon-fibre. Suitable epoxy resins are polyethers which are obtained by reaction of an compound having hydroxyl groups, e.g. bisphenol, with an epoxy compound, e.g. epichloro-hydrine. Typically, epoxy resins may be cured by reaction with an hardener, e.g. amines, acids, acid anhydrides, thiols.

Preferred polymers are homo- and copolymers of styrene, such as polystyrene, styrene/acrylonitrile copolymer and especially acrylonitrile/butadiene/styrene copolymers (ABS).

A preferred embodiment relates to the process of the invention described, wherein the plastic surface is one consisting of or comprising polyamides, polyolefins, polyesters, polyethers, polyacetals, polycarbonate, polyurethanes, polyacrylates, polystyrene or copolymers of styrene selected from styrene/acrylonitrile copolymers (SAN), acrylic ester/styrene/acrylonitrile copolymers (ASA) and acrylonitrile/butadiene/styrene copolymers (ABS). The plastic to be coated may also comprise blends consisting of two or more of the plastics mentioned and/or a plastic part consisting of two or more of the plastics mentioned (two-component plastics).

A further preferred embodiment relates to the process of the invention described, wherein the plastic comprises (or consists of) one or more of plastics selected from polyamides, polyolefins, polyesters, polyethers, polyacetals, polycarbonate, polyurethanes, polyacrylates, polystyrene or copolymers of styrene selected from styrene/acrylonitrile copolymers (SAN), acrylic ester/styrene/acrylonitrile copolymers (ASA), acrylonitrile/butadiene/styrene copolymers (ABS) and carbon-fibre-reinforced epoxy resins.

A preferred embodiment relates to the process of the invention described, wherein the plastic surface is one consisting of or comprising polyamides, polystyrenes or copolymers of styrene selected from styrene/acrylonitrile copolymers (SAN), acrylic ester/styrene/acrylonitrile copolymers (ASA) and acrylonitrile/butadiene/styrene copolymers (ABS), or blends and/or multicomponent plastics comprising at least one, preferably at least two, of the plastics mentioned.

Particularly preferred plastics are polyamides and ABS. Most preferably, the plastic comprises acrylonitrile/butadiene/styrene copolymer (ABS) or a blend, for example ABS/PC (acrylonitrile/butadiene/styrene copolymer and polycarbonate) and/or multicomponent plastic comprising ABS. ABS is supplied, for example, under the Terluran^{®} trade name by Styrolution.

The articles to be coated may consist entirely of one or more of the above plastics. Articles of this kind may have any desired shape and are obtainable, for example, by thermoplastic forming methods such as injection molding, extrusion, thermoforming and blow molding. Alternatively, they may consist of different materials. What is essential is that the surface to be coated consists of plastic.

In the process of the invention, the plastic or the plastic surface is coated with metals. Useful metals are especially nickel, aluminium, copper, chromium, tin or zinc and alloys thereof. The metal may be applied in one or preferably in more than one layer or operation. It is possible with preference to apply layers of different metals, especially at least three different metal layers.

A preferred embodiment relates to the process of the invention described, wherein the metals comprise at least one metal selected from nickel, aluminium, copper, chromium, tin, zinc and alloys thereof.

An essential element in the process of the invention is the pretreatment of the plastics or the plastic surface. The various process steps for chemical and electrolytic coating with metal and further measures for performance, preparation and finishing that are necessary or advisable for the purpose are described in a wide variety of different embodiments in the prior art, for example in DE-A 100 54 544, Schlesinger et al. "Modern Electroplating" chapter 18, pages 450-457 (5th edition, 2010, John Wiley & Sons Inc., ISBN 978-0-470-16778-6) or Kanani "Galvanotechnik" [Electroplating Technology] (Carl Hanser Verlag, 2000, ISBN 3-446-21024-5).

Even prior to the pretreatment of the invention in step a), cleaning and/or degreasing of the plastic surface to be coated may be advisable. Cleaning and degreasing of this kind can be conducted with standard cleaning compositions or detergents.

### Step a)

The process of the invention comprises, in step a), the pretreatment of the plastic surface with the etching composition comprising at least one ionic liquid and at least one lactamide. Preferred ionic liquids and lactamides of the etching composition are described above.

Preferably, the pretreatment of the plastic surface with the etching composition in step a) is carried out at a temperature of 30 to 120°C, more preferably of 40 to 120°C, especially preferably of 50 to 65°C and most preferably 50 to 60°C. Preferably, the etching composition has the above temperature for the purpose. There is often no need for preceding separate heating of the plastic surface to be coated, or of the plastic molding to be coated.

Preferably, the pretreatment of the plastic surface with the etching composition in step a) is carried out over a period of 1 to 60 min, preferably 1 to 30 min, especially preferably 2 to 20 min and more preferably 5 to 10 min.

Preferably, the pretreatment of the plastic surface with the etching composition in step a) is carried out at a temperature in the range from 50 to 65°C over a period of 5 to 20 min. More preferably, the pretreatment of the plastic surface with the etching composition in step a) is carried out at a temperature in the range from 50 to 60°C over a period of 5 to 15 min.

In a preferred embodiment, the invention relates to a process for coating a plastic surface, especially a plastic molding, consisting of or comprising acrylonitrile/butadiene/styrene copolymer ABS, wherein the pretreatment of the plastic surface, especially of the plastic molding, with the etching composition in step a) is carried out at a temperature in the range from 50 to 60°C, preferably 50 to 55°C over a period of 5 to 15 min, preferably 5 to 10 min. The plastic surface consisting or comprising acrylonitrile/butadiene/styrene copolymer (ABS) may especially be a plastic molding consisting essentially of ABS, of a blend comprising ABS, e.g. ABS/PC (acrylonitrile/butadiene/styrene copolymer and polycarbonate), and/or a multicomponent plastic comprising ABS.

In a preferred embodiment, the plastic surface to be coated, especially the plastic molding to be coated, is dipped into the etching composition, where the etching composition preferably has the above temperature. In this case, the etching composition can be agitated for better mass transfer, which can be carried out by stirring, pumping, blowing air in, etc. Alternatively, the plastic surface itself can also be agitated in the etching composition by means of specific devices known in electroplating. The person skilled in the art is aware of suitable methods for the purpose.

The required amount of etching composition is adjusted in such a way that the plastic surface is wetted to the desired degree. The plastic surface or the plastic molding can be immersed completely or else partially.

The viscosity of the etching composition is preferably in the range from 20 to 200 mPas, preferably in the range from 30 to 100 mPas and more preferably in the range from 30 to 70 mPas (dyn., 60°C).

### Step b)

The process of the invention comprises, in step b), the treating of the plastic surface from step a) with an aqueous rinse solution RS while applying ultrasound. The treatment in step b) can especially remove the adhering etching composition, but also partly dissolved plastic particles, from the surface, especially from the surface of the plastic molding.

In a preferred embodiment, the treating of the plastic surface with the aqueous rinse solution RS with application of ultrasound in step b) is carried out by dipping the plastic surface from step a) into an ultrasound bath comprising the aqueous rinse solution RS for a period of 1 to 30 min, preferably 2 to 20 min and more preferably 5 to 15 min. In particular an sufficient rinsing might be obtained after 1 to 2 min, in particular at about 90 sec. Preferably, step b) is carried out by dipping the plastic surface from step a) into an ultrasound bath comprising the aqueous rinse solution RS for a period of 1 to 2 min at a temperature in the range from 40 to 60°C.

In a preferred embodiment, the treating of the plastic surface, especially the plastic molding, with the aqueous rinse solution RS while applying ultrasound in step b) is carried out by dipping the plastic surface, especially the plastic molding, from a) into an ultrasound bath comprising the aqueous rinse solution RS at a power in the range from 40 to 60 watts/L, over a period of 1 to 30 min and at a temperature of 40 to 60°C, and wherein the aqueous rinse solution RS comprises at least 85% by weight of water, preferably at least 95% by weight.

The aqueous rinse solution RS preferably comprises water or a mixture of water and one or more water-miscible organic solvents, where the proportion of water is generally at least 85% by weight, preferably at least 95% by weight and more preferably at least 98% by weight, based in each case on the overall rinse solution. Organic solvents used may be known polar water-miscible solvents such as alcohols or dimethyl sulfoxide (DMSO). Organic solvents used may especially be water-miscible alcohols such as methanol, ethanol or propanol. In a preferred embodiment, the rinse solution RS consists exclusively of water.

The rinse solution RS may optionally comprise the additions known to those skilled in the art, for example surfactants.

The pH of the rinse solution RS is preferably in the range from 5 to 8, especially from 6 to 7. Preferably, the rinse step b), which may also consist of a plurality of steps, is conducted at a temperature in the range from 10 to 80°C, preferably 20 to 70°C, more preferably at 40 to 60°C.

The ultrasound treatment is preferably carried out at frequencies in the range from 20 to 400 kHz, preferably 30 to 50 kHz. The ultrasound treatment is preferably carried out at a power in the range from 10 to 100 watts/L, preferably from 40 to 60 watts/L. Especially preferably, the ultrasound treatment is carried out at a power in the range from 40 to 60 watts/L, over a period of 5 to 15 min and a temperature of 40 to 60°C. Further preferred, the ultrasound treatment is carried out at a power in the range from 40 to 60 watts/L, over a period of 1 to 2 min and a temperature of 40 to 60°C.

Preferably, step b) may comprise a plurality of rinse steps, especially further rinse steps without application of ultrasound. Preferably, the treating of the plastic surface with an aqueous rinse solution RS in step b) may comprise, as an additional step, the treating of the plastic surface with at least one further aqueous rinse solution RS, especially water, which may be carried out, for example, by spraying or dipping the plastic surface.

A preferred embodiment relates to a process as described, wherein step b) comprises (and preferably consists of) the following steps:
b1) treating the plastic surface, especially the plastic molding, from step a) with a first aqueous rinse solution RS1, by spraying the plastic surface, especially the plastic molding, with the first aqueous rinse solution RS1 or dipping it into the first aqueous rinse solution RS1; and
b2) treating the plastic surface, especially the plastic molding, from step b1) with a second aqueous rinse solution RS2 while applying ultrasound.

The process of the invention, especially steps a) and/or b), can be conducted partly or fully continuously or quasi-continuously.

In one embodiment, the etching composition is recovered after step a) and fed fully or partly back to the etching step a) (recycling). The recycling of the etching composition can be carried out, for example, by a precipitation of the dissolved plastic by means of water or an organic solvent and subsequent removal of the dissolved plastic by a filtration. The medium/media utilized for precipitation can subsequently be recovered by distillation. It is also possible to remove volatile constituents of the dissolved plastic from the composition by direct distillation. In this way, it is possible to obtain a purified and reusable etching composition.

In a preferred embodiment, the rinse solution RS is recovered after step b), especially after steps b1) and/or b2), and fed fully or partly back to the rinse steps b), especially the rinse steps b1) and/or b2) (recycling). Preferably, the spent rinse solution is cleaned beforehand, for example by filtration.

The recycling of the rinse solutions RS can be carried out, for example, by removing the plastic present therein, preferably by a filtration. In this way, it is possible to obtain a cleaned and reusable rinse solution (which is generally a mixture of water and ionic liquid) which can then be recycled fully or partly to rinse steps b1) and/or b2). Preferably, a portion of the rinse solution recovered is discharged, especially in order to prevent enrichment of ionic liquid in the rinse solution RS in the circuit.

### Step c)

The process of the invention comprises, in step c), the treating of the plastic surface from step b) with an activator composition A comprising at least one ionogenic and/or colloidal activator, especially at least one palladium component P, preferably at least one colloidal palladium component P.

Typically, step c) comprises, especially in combination with step d), the applying of metal nuclei, preferably of metal nuclei of palladium, silver or gold, more preferably of palladium. Step c) is typically referred to as activation. Preferably, the manner of activation and the first metal coating in step e) are matched to one another.

Known methods for activation are, for example, conventional colloidal activation (application of palladium/tin colloids), ionogenic activation (application of palladium cations), direct metallization or processes known by the Udique Plato^{®}, Enplate MID select or LDS Process names.

For example, activation with ionogenic systems can be accomplished by first treating the plastic surface with tin(II) ions, generally with formation of firmly adhering gels of tin oxide hydrate on rinsing with water after the treatment with the tin(II) ions. In the subsequent treatment with a palladium salt solution, palladium nuclei are normally formed on the plastic surface through reduction with the tin(ll) species, and these typically serve as catalyst/metal nucleus for the later chemical metallization (step e)).

For activation with colloidal systems, it is possible to use noble metal colloid compositions, especially colloids of the gold group (transition group I) and platinum group of the Periodic Table. Preference is given to using colloidal solutions of palladium, silver or gold, especially preferably colloidal solutions of palladium. In the colloidal solution, the metal nuclei, for example the palladium nuclei, are typically surrounded by the protective colloid shell. It is possible with preference to use palladium colloid solutions which form through reaction of palladium chloride with tin(ll) chloride in the presence of excess hydrochloric acid.

The concentration of the at least one ionogenic and/or colloidal activator P in the activator composition A is typically 20 to 150 mg/L.

Typical palladium-containing activator systems and further details of the activation step are described in Annual Book of ASTM Standard, Vol. 02.05 "Metallic and Inorganic Coatings; Metal Powders, Sintered P/M Structural Parts", Standard Practice for Preparation of Plastic Materials for Electroplating, 1995, pages 446-450.

Typically, the activator P used may be a standard commercially available palladium activator, for example "Activator U" from HSO or "SurTec 961 Pd" from SurTec.

### Step d)

The process of the invention comprises, in step d), the treating of the plastic surface from step c) with an accelerator composition B comprising an acid and/or a reducing agent.

The treatment of the plastic surface with the accelerator composition B especially frees the metal nuclei adsorbed on the surface (especially in the depressions), especially palladium, silver or gold nuclei, of the protective colloid shell and/or reduces the absorbed metal salts to the metal. The treatment of the plastic surface with the accelerator composition B typically gives rise to metal nuclei on the plastic surface, preferably metal nuclei of palladium, silver or gold, more preferably of palladium. These metal nuclei typically serve as the starting point (catalyst) for the subsequent chemical metal deposition in step e).

According to the invention, the accelerator composition B comprises at least one reducing agent and/or an acid which is particularly suitable for removing the protective metal colloid shell and/or for reducing metal salts present at the surface to the metal. Preferably, the at least one reducing agent is selected from alkali metal, ammonium or alkaline earth metal fluoroborate, for example sodium tetrafluoroborate (NaBF₄), peroxides, sulfites, hydrogensulfites, hydrazine and salts thereof, hydroxylamine and salts thereof. Preferably, the at least one acid is selected from hydrochloric acid, methanesulfonic acid, citric acid, ascorbic acid, tartaric acid, tetrafluoroboric acid (HBF₄).

The pH of the accelerator composition B may especially be set within a range from 0 to 7, preferably from 1 to 2.

The concentration of the acid and/or the reducing agent in the accelerator composition B is typically 0.4 to 0.5 N; the concentration is especially 0.45 N (pH 1.5).

Typical accelerator compositions and further details of the acceleration step are described in Annual Book of ASTM Standard, Vol. 02.05 "Metallic and Inorganic Coatings; Metal Powders, Sintered P/M Structural Parts", Standard Practice for Preparation of Plastic Materials for Electroplating, 1995, pages 446-450.

Typically, the accelerator composition B used may be a standard commercially available accelerator, for example "HSO Accelerator" from HSO or "SurTec 961 A Pd" from SurTec.

### Step e)

A further constituent of the process of the invention is the application of what is called a first metal coating, which is typically carried out by electroless means (chemical metal deposition). In general, the first layer applied by electroless means (seed layer) is a layer of nickel, copper, chromium or alloys thereof. Preference is given to one or more layers of nickel and/or copper. Particular preference is given to exactly one layer consisting essentially of nickel.

The process of the invention comprises, in step e), the chemical deposition of a metal layer, preferably of a metal layer consisting essentially of nickel, by treating the plastic surface, especially the plastic molding, from step d) with a coating composition M1 comprising at least one metal salt, preferably at least one nickel(ll) salt, and at least one reducing agent, preferably an in situ reducing agent.

Further preferably, step e) comprises the chemical deposition of a metal layer consisting essentially of nickel and/or copper, by treating the surface from step d) with a coating composition M1 comprising at least one nickel(II) salt and/or one copper(II) salt, and at least one reducing agent, preferably an in situ reducing agent.

Typical coating compositions M1 are described, for example, in Schlesinger et al. "Modern Electroplating" (5th edition, 2010, John Wiley & Sons Inc., ISBN 978-0-470-16778-6) on page 451.

Preferably, the plastic surface or the plastic molding from step d) is coated with a metal layer consisting of nickel, copper, chromium or alloys thereof, more preferably of nickel or a nickel alloy.

Preferably, the metal salt is selected from nickel, copper and chromium salts, for example halides or sulfates. Preferably, the coating composition M1 comprises at least one nickel salt, for example nickel sulfate.

The concentration of the at least one metal salt, especially of the at least one nickel salt, in the coating composition M1 is typically in the range from 15 to 35 g/L.

The pH of the coating composition M1 is typically in the range from 4 to 11. In principle, according to the type of buffer system, a distinction may be made between acidic or alkaline compositions. In the case of the acidic methods, the pH of the coating composition M1 is typically in the range from 4 to 7, preferably 4 to 6. In the case of alkaline methods, the pH is typically in the range from greater than 7 to 11, preferably 8 to 10. Preferably, the pH is set to about 9.

Preferably, the coating composition M1 comprises at least one reducing agent, especially an in situ reducing agent, selected from the group consisting of hydrogen peroxide, peroxides, hypophosphites, hypophosphates (e.g. sodium hypophosphate), borane and borane derivatives (e.g. aminoborane such as dimethylaminoborane, sodium borohydride) and hydrazine.

The concentration of reducing agent in the coating composition M1 is typically 15 to 30 g/L.

Typically, the coating composition M1 for chemical nickel baths may comprise typical further components and additives known to those skilled in the art, as described, for example, in chapter 18.3 in Schlesinger et al. "Modern Electroplating" (5th edition, 2010, John Wiley & Sons Inc., ISBN 978-0-470-16778-6). Typically, the coating composition M1 may comprise complexing agents for the nickel ions, preferably carboxylic acids and hydroxycarboxylic acids, for example succinic acid, citric acid, malic acid, tartaric acid and/or lactic acid, and acetic acid, propionic acid, maleic acid, fumaric acid and/or itaconic acid. Buffers used may typically be citrates, acetates, phosphates and ammonium salts.

Typically, the coating composition M1 used may be a standard commercially available coating bath for electroless nickel deposition, for example "Electroless Nickel 601KB" from HSO or "SurTec 3/11D" or "SurTec 971" from SurTec.

The temperature of the coating composition M1 during the performance of step d) in the case of acidic processes is typically 60 to 100°C and in the case of alkaline processes typically in the range from 25 to 50°C.

### Step f)

Step f) of the process of the invention, finally, comprises the electrochemical deposition of metal layers, preferably of one or more layers consisting essentially of nickel, copper and/or chromium. Step f) may especially comprise one, two or more than two different electrochemical coatings.

By the process of the invention, it is possible to improve the adhesion of the metal layers, especially of the chemically deposited nickel layer described and of the subsequent electrochemically deposited nickel, copper and chromium layer, to plastic surfaces, for example made from ABS, or to actually make said adhesion possible at all for many plastics. The achieved adhesion of the metal layers is very good, even in the event of mechanical stress or high temperatures. In addition, the metal surfaces obtained by the process of the invention have a particularly advantageous regular structure.

The process of the invention comprises, in step f), the electrochemical coating of the plastic surface, especially the plastic molding, from step e) with at least one further metallic layer, by electrochemically treating the plastic surface, especially the plastic molding, from step e) with at least one coating composition M' comprising at least one metal compound.

Preferably, step f) comprises the electrochemical coating of the plastic surface, especially the plastic molding, with at least one metallic layer consisting essentially of copper. For this purpose, the plastic surface, especially the plastic molding, is subjected to an electrochemical electrolysis with a coating composition M2 comprising at least one copper compound, preferably at least one copper(II) salt.

Preferably, step f) comprises the electrochemical coating of the plastic surface, especially the plastic molding, with at least one metallic layer consisting essentially of chromium. For this purpose, the plastic surface, especially the plastic molding, is preferably contacted with a coating composition M3 comprising at least one chromium compound, preferably selected from chromic acid, chromic acid derivatives, chromium(VI) salts and chromium(III) salts, and subjected to an electrochemical electrolysis.

Preferably, the invention relates to a process as described above, wherein the electrochemical coating in step f) comprises (and preferably consists of) the following steps:
f1) electrochemically coating the surface, especially the plastic molding, from step e) with a layer consisting essentially of copper and/or nickel, by treating the surface, especially the plastic molding, from step e) with a coating composition M2 comprising at least one copper compound, especially a Cu(!!) salt, and/or at least one nickel compound, especially an Ni(ll) salt; and
f2) electrochemically coating the surface, especially the plastic molding, from step f1) with a layer consisting essentially of chromium, by treating the surface, especially the plastic molding, from step f1) with a coating composition M3 comprising at least one chromium compound, especially comprising at least one chromium compound selected from chromic acid, chromic acid derivatives, chromium(VI) salts and chromium(III) salts.

Preferably, in step f1), the surface from step e) is electrochemically coated with a layer consisting essentially of copper, by treating the surface from step e) with a coating composition M2 comprising at least one copper compound, especially comprising at least one Cu(ll) salt. Further preferably, in step f1), the surface from step e) is electrochemically coated with one or more layers consisting essentially of copper and one or more layers consisting essentially of chromium. Preferred coating sequences (steps e), f1) and f2)) may be as follows:
Ni (chem) → SB-Ni → B-Ni → Cr or Ni (chem) → Cu → SB-Ni → B-Ni → Cr or Cu (chem) → SB-Ni → B-Ni → Cr or Cu (chem) → Cu → SB-Ni → B-Ni → Cr;
where SB-Ni is a semibright nickel layer and B-Ni is a bright nickel layer.

Typically, the coating composition M2 comprises at least one copper salt, preferably at least one copper(II) salt, for example copper sulfate (CuSO₄). Typically, the coating composition M2 comprises at least one copper salt, water and an acid, for example sulfuric acid, alkylsulfonic acids such as methane sulfonic acid. Typically, the coating composition M2 may comprise as a further additive an additive customary for this application, for example a surfactant, a brightener, suppressors or levellers.

Typically, the coating composition M2 used may be a standard commercially available copper electrolysis bath, for example "Copper HD 500" from HSO, "SurTec 866 CN" or "SurTec 867" from SurTec.

Typically, the coating composition M3 comprises at least one chromium salt and/or chromic acid, preferably at least one chromium(III) salt and/or one chromium(VI) salt, more preferably chromic acid H₂CrO₄ and/or chromium trioxide CrO₃. Typically, the coating composition M3 comprises at least one chromium compound, especially chromic acid, water and an acid as catalyst, for example at least one acid selected from sulfuric acid (H₂SO₄), hydrofluoric acid (HF), hexafluorosilicic acid (H₂SiF₆), alkylsulfonic acids such as methane sulfonic acid. Typically, the coating composition M3 may comprise, as further additive, a surfactant known for this application.

The process of the invention may comprise one or more rinse steps, in each case before and/or after the steps a) to f) described. Especially after step f), the plastic surfaces, especially the plastic moldings, may be rinsed, preferably rinsed with water, and/or dried.

In a third aspect, the present invention provides use of at least one lactamide of the general formula (I⁰) in the etching composition for coating plastic surfaces with metals.

Examples

Aspects of the present invention are more fully illustrated by the following Examples, which are set forth to illustrate certain aspects of the present invention and are not to be construed as limiting thereto.

### Materials:

The materials shown in Table 1 are used.

**Table 1**

| Material/Trade Name | Supplier |
|---|---|
| **Ionic liquid** | |
| 1-ethyl-3-methylimidazolium ethylsulfate (Synonym: 1H-Imidazolium, 1-ethyl-3-methyl-, ethyl sulfate) | Commercially available from BASF |
| | |

| **lactamide** | |
|---|---|
| N,N-dimethyl lactamide | Commercially available from BASF |
| | |

| **ABS materials** | |
|---|---|
| Polylac^{®} PA-757K ABS | CHI MEI |
| Kingplate^{™} ABS 0710 | Shanghai Kumho Sunny Plastics Co., Ltd. |
| Starex^{®} MP-0670 ABS | Lotte Chemical |
| Terluran^{®} GP-22 ABS | INEOS |
| Terluran^{®} GP-35 ABS | INEOS |

### Preparation of Inventive Etching Composition:

1. Weighing 650 g of ionic liquid in a glass container.
2. Weighing 350 g of lactamide and mixing lactamide with the ionic liquid under stirring condition at 500 rpm.
3. Stirring the mixture of ionic liquid and lactamide at 500 rpm for 20 min at room temperature.

### Preparation of Comparative Etching Composition A:

1. Weighing 600 g of ionic liquid in a glass container.
2. Weighing 400 g of ethylene carbonate and mixing ethylene carbonate with the ionic liquid under stirring condition at 500 rpm.
3. Stirring the mixture of ionic liquid and ethylene carbonate at 500 rpm for 20 min at room temperature.

### Preparation of Comparative Etching Composition B:

1. Weighing 600 g of ionic liquid in a glass container.
2. Weighing 400 g of propylene carbonate and mixing propylene carbonate with the ionic liquid under stirring condition at 500 rpm.
3. Stirring the mixture of ionic liquid and propylene carbonate at 500 rpm for 20 min at room temperature.

### Preparation of Comparative Etching Composition C:

1. Weighing 600 g of ionic liquid in a glass container.
2. Weighing 400 g of polyethylene glycols (from BASF) having a molecular weight in the range of 200 - 600 g/mol and mixing polyethylene glycols with the ionic liquid under stirring condition.
3. Stirring the mixture of ionic liquid and polyethylene glycols for 20 min at room temperature.

### Process for coating plastic surfaces with metals

A plaque of dimensions 60 x 30 x 2 mm of ABS substrate shown in Table 1 is immersed into 1 L of the stirred etching composition at 55°C for 10 min. After the etching has ended, the substrate is rinsed with water and subsequently treated in an ultrasound water bath at 40°C for 30 min.

After the etching and rinsing, the test plaques were metallized with the below process.

ABS plastic material metallization process:
palladium activation → washing with DI water → palladium reduction → washing with DI water → electroless nickel plating → washing with DI water → copper plating

Process is detailed in Table 2:
Workpiece material: ABS sample etched by the etching composition and cleaned by DI water.
Workpiece surface area: 0.2-1 dm²

**Table 2:**

| Process | Palladium activation | Palladium Reduction | Electroless nickel plating | Copper plating |
|---|---|---|---|---|
| Chemicals | SurTec 961 Pd Palladium Colloidal Catalyst | SurTec 961 A Pd Colloidal Accelerator | SurTec 971 Electroless Nickel | SurTec 866 CN |
| Chemical solution volume | 3.5 L | 0.5 L | 2 L | 2 L |
| Container | glassware | glassware | glassware | glassware |
| Number of workpieces | treating one workpiece at a time | treating one workpiece at a time | treating one workpiece at a time | treating one workpiece at a time |
| Temperature | 38°C | 50°C | 29°C | 25°C |
| pH value | <1 | / | 8.8 | pH: <1(pH monitoring is not necessary) |
| Time | 4 min | 3 min | 8 min | 10-30 min |
| Stirring | workpiece movement | air stirring | workpiece movement | strong air stirring |
| | | | | current density: 1-6 ASD |

### Evaluation on etching effect of the etching composition:

Missing plating means that the metal layer is not deposited in some areas or the metal layer is deposited unevenly.

Copper wrinkling means that some areas of the metal coating after electroplating have wrinkles or bulges.

### Cross-hatch adhesion:

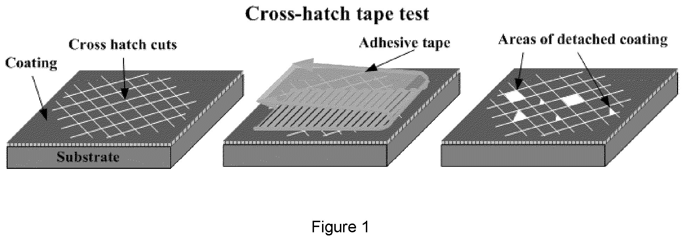

Cross-hatch tape test was performed as follows and shown in Figure 1:
1. Putting the electroplated sample on a flat table, using a knife perpendicular to the surface of the sample to apply even force, and smoothly drawing parallel cutting lines.
2. Crossing the first cutting line at 90° and drawing parallel lines to form a grid pattern.
3. Using a soft brush to clean up the lines in the grid.
4. Putting 3M tape on the center of the grid and making sure it is in full contact with the plated layer.
5. Forming an angle of about 60° between the tape and the sample, and tearing off the tape continuously and steadily.
6. Observing the peeling of the plated layer carefully.

Copper peeling means that the metal coating after the cross-hatch tape test is not complete and continuous.

The test results for Inventive Etching Composition are summarized in Table 3.

**Table 3**

| ABS sample | Inventive Etching Composition | | |
|---|---|---|---|
| Plating performance | Miss plating | Copper wrinkling | Copper peeling |
| Polylac^{®} PA-757K ABS | No | No | No |
| Terluran^{®} GP-35 ABS | No | No | No |
| Terluran^{®} GP-22 ABS | No | No | No |
| Kingplate^{™} ABS 0710 | No | No | No |
| Starex^{®} MP-0670 ABS | No | No | No |

The test results for Comparative Etching Composition A are summarized in Table 4.

**Table 4**

| ABS sample | Comparative Etching Composition A | | |
|---|---|---|---|
| Plating performance | Miss plating | Copper wrinkling | Copper peeling |
| Polylac^{®} PA-757K ABS | No | No | Yes |
| Terluran^{®} GP-35 ABS | No | No | Yes |
| Terluran^{®} GP-22 ABS | No | No | Yes |
| Kingplate^{™} ABS 0710 | No | No | Yes |
| Starex^{®} MP-0670 ABS | No | No | Yes |

The test results for Comparative Etching Composition B are summarized in Table 5.

**Table 5**

| ABS sample | Comparative Etching Composition B | | |
|---|---|---|---|
| Plating performance | Miss plating | Copper wrinkling | Copper peeling |
| Polylac^{®} PA-757K ABS | No | No | Yes |
| Terluran^{®} GP-35 ABS | No | No | Yes |
| Terluran^{®} GP-22 ABS | No | No | Yes |
| Kingplate^{™} ABS 0710 | No | No | Yes |
| Starex^{®} MP-0670 ABS | No | No | Yes |

The test results for Comparative Etching Composition C are summarized in Table 6.

**Table 6**

| ABS sample | Comparative Etching Composition C | | |
|---|---|---|---|
| Plating performance | Miss plating | Copper wrinkling | Copper peeling |
| Polylac^{®} PA-757K ABS | Yes | - | - |
| Terluran^{®} GP-35 ABS | Yes | - | - |
| Terluran^{®} GP-22 ABS | Yes | - | - |
| Kingplate^{™} ABS 0710 | Yes | - | - |
| Starex^{®} MP-0670 ABS | Yes | - | - |

As the etching with composition C is insufficient, the surface cannot be plated, and wrinkling and peeling tests cannot be carried out.

## Claims

1. An etching composition comprising at least one ionic liquid and at least one lactamide of the general formula (I⁰):
CH₃-CH(-OH)-C(=O)-NR⁰₂ (I⁰),
wherein the variable R° can be the same or different and independently represents alkyl groups having 1-6, preferably 1-4, more preferably 1 or 2 carbon atoms.

2. The etching composition according to claim 1, wherein at least one ionic liquid is a salt having a melting point of less than 100°C at 1 bar.

3. The etching composition according to claim 1 or 2, wherein at least one ionic liquid is at least one salt having a cation selected from imidazolium cations, pyridinium cations, pyrazolium cations and alkylammonium cations.

4. The etching composition according to any of claims 1 to 3, wherein at least one ionic liquid is of the general formula (I) 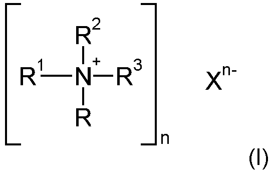 where
R is an organic group comprising 1 to 20, preferably 1 to 18, more preferably 1 to 12 and especially preferably 1 to 6 carbon atoms, where the organic group is a saturated or unsaturated, acyclic or cyclic aliphatic radical which may be unsubstituted or may be interrupted or substituted by 1 to 5 heteroatoms or functional groups;
R¹, R² and R³ are each independently:
hydrogen;
a C₁-C₁₈-alkyl radical which may optionally be substituted by functional groups selected from C₁-C₆-alkyl, C₁-C₆-alkyloxy, C₁-C₆-alkoxycarbonyl, hydroxyl, halogen, amino, cyano and sulfo and/or may be interrupted by one or more oxygen and/or sulfur atoms and/or one or more substituted or unsubstituted imino groups;
a C₂-C₁₈-alkenyl radical which may optionally be substituted by functional groups selected from C₁-C₆-alkyl, C₁-C₆-alkyloxy, C₁-C₆-alkoxycarbonyl, hydroxyl, halogen, amino, cyano and sulfo and/or may be interrupted by one or more oxygen and/or sulfur atoms and/or one or more substituted or unsubstituted imino groups;
a C₅-C₁₂-cycloalkyl radical which may optionally be substituted by functional groups selected from C₁-C₆-alkyl, C₁-C₆-alkyloxy, C₁-C₆-alkoxycarbonyl, hydroxyl, halogen, amino, cyano and sulfo;
a C₅-C₁₂-cycloalkenyl radical which may optionally be substituted by functional groups selected from C₁-C₆-alkyl, C₁-C₆-alkyloxy, C₁-C₆-alkoxycarbonyl, hydroxyl, halogen, amino, cyano and sulfo; or
a five- to six-membered heterocycle which includes oxygen, nitrogen and/or sulfur atoms and may optionally be substituted by functional groups selected from C₁-C₆-alkyl, C₁-C₆-alkyloxy, C₁-C₆-alkoxycarbonyl, hydroxyl, halogen, amino, cyano and sulfo,
or two adjacent R¹, R² and R³ radicals together with the nitrogen atom in formula (I) are an unsaturated or saturated five- to seven-membered ring which may optionally be substituted by functional groups selected from C₁-C₆-alkyl, C₁-C₆-alkyloxy, C₁-C₆-alkoxycarbonyl, hydroxyl, halogen, amino, cyano and sulfo and may optionally be interrupted by one or more oxygen and/or sulfur atoms and/or one or more substituted or unsubstituted imino groups;
X is an anion; and
n is 1, 2 or 3.

5. The etching composition according to any of claims 1 to 4, wherein at least one ionic liquid is selected from the group consisting of: 1,3-dimethylimidazolium methylsulfate, 1,3-dimethylimidazolium hydrogensulfate, 1,3-dimethylimidazolium dimethylphosphate, 1,3-dimethylimidazolium acetate, 1-ethyl-3-methylimidazolium methylsulfate, 1-ethyl-3-methylimidazolium ethylsulfate, 1-ethyl-3-methylimidazolium hydrogensulfate, 1-ethyl-3-methylimidazolium thiocyanate, 1-ethyl-3-methylimidazolium acetate, 1-ethyl-3-methylimidazolium methanesulfonate, 1-ethyl-3-methylimidazolium diethylphosphate, 1-(1-butyl)-3-methylimidazolium methylsulfate, 1-(1-butyl)-3-methylimidazolium hydrogensulfate, 1-(1-butyl)-3-methylimidazolium thiocyanate, 1-(1-butyl)-3-methylimidazolium acetate, 1-(1-butyl)-3-methylimidazolium methanesulfonate, methyltri(1-butyl)ammonium methylsulfate and 1-butyl-1-methylpyrrolidinium dimethylphosphate.

6. The etching composition according to any of claims 1 to 5, comprising:
50% to 90 % by weight, preferably 55 % to 85 % by weight and more preferably 60% to 80% by weight of the at least one ionic liquid, based on the overall etching composition; and
10 % to 50 % by weight, preferably 15 % to 45 % by weight, more preferably 20% to 40% by weight of at least one lactamide of the general formula (I⁰), based on the overall etching composition.

7. A process for coating a plastic surface with metals, comprising the steps of
a) pretreating the plastic surface with the etching composition according to any of claims 1 to 6;
b) treating the plastic surface from step a) with an aqueous rinse solution RS while applying ultrasound;
c) treating the plastic surface from step b) with an activator composition A comprising at least one ionogenic and/or colloidal activator;
d) treating the plastic surface from step c) with an accelerator composition B comprising an acid and/or a reducing agent;
e) chemically depositing a metal layer, by treating the plastic surface from step d) with a coating composition M1 comprising at least one metal salt and at least one reducing agent;
f) electrochemically coating the surface from step e) with at least one further metal layer, by electrochemically treating the surface from step e) with at least one coating composition M' comprising at least one metal compound.

8. The process according to claim 7, wherein the plastic surface is one consisting of or comprising polyamides, polystyrenes or copolymers of styrene selected from styrene/acrylonitrile copolymers, acrylic ester/styrene/acrylonitrile copolymers and acrylonitrile/butadiene/styrene copolymers, or blends and/or multicomponent plastics comprising at least one of the plastics mentioned.

9. The process according to claim 7 or 8, wherein the metals comprise at least one metal selected from nickel, aluminium, copper, chromium, tin, zinc and alloys thereof.

10. The process according to any of claims 7 to 9, wherein the plastic surface is one consisting of or comprising acrylonitrile/butadiene/styrene copolymer, in which case the pretreatment of the plastic surface with the etching composition in step a) is carried out at a temperature in the range from 50 to 60°C over a period of 5 to 15 min.

11. The process according to any of claims 7 to 10, wherein the treatment of the plastic surface with the aqueous rinse solution RS while applying ultrasound in step b) is carried out by dipping the plastic surface from a) into an ultrasound bath comprising the aqueous rinse solution RS at a power in the range from 40 to 60 watts/L, over a period of 1 to 30 min and at a temperature of 40 to 60°C, and wherein the aqueous rinse solution RS comprises at least 85% by weight of water.

12. The process according to any of claims 7 to 11, wherein step b) comprises the following steps:
b1) treating the plastic surface from step a) with a first aqueous rinse solution RS1, by spraying the plastic surface with the first aqueous rinse solution RS1 or dipping it into the first aqueous rinse solution RS1; and
b2) treating the plastic surface from step b1) with a second aqueous rinse solution RS2 while applying ultrasound.

13. The process according to any of claims 7 to 12, wherein the electrochemical coating in step f) comprises the following steps:
f1) electrochemically coating the surface from step e) with a layer consisting essentially of copper and/or nickel, by treating the surface from step e) with a coating composition M2 comprising at least one copper compound and/or at least one nickel compound; and
f2) electrochemically coating the surface from step f1) with a layer consisting essentially of chromium, by treating the surface from step f1) with a coating composition M3 comprising at least one chromium compound.

14. Use of at least one lactamide of the general formula (I⁰) as defined in claim 1 in the etching composition for coating plastic surfaces with metals.
